# EUROPÄISCHE PATENTSCHRIFT

(11) **EP 0 972 175 B1**
(45) Veröffentlichungstag und Bekanntmachung des Hinweises auf die Patenterteilung: **11.05.2005**
(21) Anmeldenummer: 98913648.6
(22) Anmeldetag: 05.03.1998
(51) Int. Cl.: G01K 13/00

(54) **MESSSPITZE FÜR STRAHLUNGSTHERMOMETER**
MEASURING TIP FOR A RADIATION THERMOMETER
TOUCHE DE MESURE POUR THERMOMETRE DE MESURE DU RAYONNEMENT

(30) Priorität: 02.04.1997 DE 19713608
(43) Veröffentlichungstag der Anmeldung: 19.01.2000
(73) Patentinhaber: Braun GmbH, Kronberg (DE)
(72) Erfinder: KRAUS, Bernhard, D-35619 Braunfels (DE); BEERWERTH, Frank, D-65594 Runkel-Ennerich (DE); HONNEFELLER, Katja, D-61381 Friedrichsdorf (DE)
(86) Internationale Anmeldenummer: PCT/EP1998/001246
(87) Internationale Veröffentlichungsnummer: WO 1998/044322

(56) Entgegenhaltungen:
- EP-A- 0 593 415
- EP-A- 0 763 349
- WO-A-90/05902
- WO-A-94/20023
- US-A- 5 445 158

## Beschreibung

Die vorliegende Erfindung betrifft eine Meßspitze für ein Strahlungsthermometer gemäß dem Oberbegriff des Anspruchs 1 sowie ein eine solche Meßspitze umfassendes Strahlungsthermometer.

Strahlungsthermometer werden zunehmend häufiger zur schnellen und präzisen Bestimmung der Körpertemperatur eingesetzt. Hierbei werden deren Meßspitzen einfach in den Gehörgang eingeführt, um die vom Trommelfell ausgestrahlte Infrarotstrahlung zu messen, die ein genauer Indikator für die Körpertemperatur ist und deren Veränderungen besser widerspiegelt als dies bei oralen, rektalen oder axillaren Messungen der Fall ist. Strahlungsthermometer erweisen sich hierbei im Vergleich zu herkömmlichen Quecksilber-Fieberthermometern nicht nur als wesentlich schneller und präziser, sondern es besteht auch keine Gefahr einer wechselseitigen Infektion durch Kontakt mit den Schleimhäuten, so wie dies beispielsweise bei oralen oder rektalen Messungen mit Quecksilberthermometern vorkommen kann. Zudem entfällt auch das Risiko einer Darmperforation, eine stete Gefahr bei rektalen Temperaturmessungen mit herkömmlichen Thermometern bei Babies und Kindern.

Die Meßspitzen von Strahlungsthermometern umfassen üblicherweise eine Eintrittsöffnung für die zu messende Infrarotstrahlung, die durch einen von der Eintrittsöffnung ausgehenden Infrarot-Wellenleiter zu einem thermischen Strahlungssensor, wie z.B. einem pyroelektrischen Sensor, einem Thermopile, oder einem Bolometer, geleitet wird. Dieser wandelt die im Sensor hervorgerufene partielle Temperaturerhöhung in eine elektrische Ausgangsspannung um, aus der mittels einer nachgeschalteten Meßelektronik die gesuchte Temperatur ermittelt wird.

Treten in einer solchen Meßspitze Temperaturgradienten auf, wie sie beispielsweise bei einer Erwärmung der Meßspitze infolge eines Kontaktes mit dem Ohrkanal entstehen können, kommt es wegen der Empfindlichkeit thermischer Strahlungssensoren ohne entsprechende Gegenmaßnahmen häufig zu Fehlmessungen.

Zur Vermeidung solcher Fehlmessungen sind aus dem Stand der Technik eine Reihe unterschiedlicher Verfahren bekannt.

So wird in der amerikanischen Patentschrift 4,602,642 beispielsweise vorgeschlagen, die Meßspitze eines Strahlungsfieberthermometers vor der Messung auf die zu erwartende Meßtemperatur von etwa 37 °C zu erwärmen, um dadurch Temperaturgradienten zwischen dem Meßort, d.h. üblicherweise dem Gehörgang, und der Meßspitze mit dem sich darin befindlichen Strahlungssensor möglichst klein zu halten und dadurch den Einfluß solcher Temperaturgradienten auf die Meßgenauigkeit zu minimieren. Eine gleichmäßige Erwärmung der Meßspitze ist jedoch technisch recht aufwendig, was sich nicht nur nachteilig auf das Herstellungsverfahren und die damit verbundenen Kosten, sondern auch auf die Bedienungsfreundlichkeit einer solchen Meßspitze auswirkt. Zudem ist eine recht lange Aufwärmphase erforderlich, die schnelle Messungen verhindert und wegen des damit verbundenen hohen Stromverbrauchs insbesondere bei batteriegetriebenen Strahlungsthermometern eine praktische Nutzung als nicht sinnvoll erscheinen läßt.

Eine andere Möglichkeit besteht darin, den Strahlungssensor in eine große thermische Masse zu integrieren, so daß ein Wärmeeintrag nur einen geringen Temperaturanstieg und kleine Temperaturgradienten zur Folge hat. So wird in der EP 0 441 866 81 beispielsweise eine Meßspitze beschrieben, bei der der Sensor auf einem Kühlkörper sitzt und die vom Ohr kommende Wärme um den Sensor herum in den Kühlkörper geleitet und damit von dem Sensor ferngehalten wird. In der US 4,895,164 und der EP 0593415 ist ein wesentlicher Teil des Wellenleiters zusammen mit der Sensoreinrichtung von einem ausreichend großen, gut wärmeleitenden Meitallblock umgeben, um im wesentlichen isotherme Bedingungen zu gewährleisten. Nachteilig hierbei ist jedoch, daß große thermische Massen ein Thermometer unhandlich und schwer machen, so daß keine kleinen schwenkbaren Meßspitzen möglich sind. Zudem sind die Möglichkeiten beim Design und bei der Konstruktion merklich eingeschränkt. Die US 5,445,158 lehrt, den Infrarot-Sensor an seinen Seitenflächen flächig in eine große thermische Masse einzukleben, die in ihrem vorderen Teil als Wellenleiter dient, wobei die Klebeverbindung individuell bei jedem Thermometer so ausgestaltet wird, daß der Sensor bei Schwankungen der Temperatur der großen Masse möglichst kein Ausgangssignal liefert.

Gemäß der Lehre der amerikanischen Patentschrift 5,293,877 wird der Strahlungssensor von der Meßspitze thermisch isoliert, so daß ein Wärmeeintrag in die Meßspitze nur einen geringen Temperaturanstieg und kleine Temperaturgradienten im Sensor verursacht. Ein thermisch isolierter Sensor nimmt aber bei einer Erwärmung der Meßspitze eine andere Temperatur an und mißt daher auch die Eigenemission von Lichtleiter und Eintrittsfenster. Zur Berücksichtigung dieser Eigenemission muß daher neben der Sensortemperatur auch die Temperatur des Lichtleiters und des Eintrittsfensters bestimmt werden.

Zur Lösung des obengenannten Problems wird in der amerikanischen Patentschrift 5,127,742 vorgeschlagen, kurz vor und/oder nach der eigentlichen Strahlungsmessung beispielsweise mit Hilfe eines Shutters einen "Nullabgleich" durchzuführen, was jedoch mit einem zusätzlichen mechanischen und elektrischen Aufwand verbunden ist.

In der amerikanischen Patentschrift 5,293,877 werden die in der Meßspitze bzw. im Sensor auftretenden Temperaturgradienten durch Temperatursensoren bestimmt und bei der Berechnung der Strahlungstemperatur entsprechend berücksichtigt. Die Messung dieser Temperaturgradienten ist jedoch wegen der i.a. recht kleinen Temperaturdifferenzen recht aufwendig. Nachteilig ist zudem auch der Platzbedarf für die Sensoren und ihre Zuleitungen in der kleinen Meßspitze. Zusätzlich erhöht sich auch noch der Aufwand bei der Kalibrierung und bei der Berechnung der Strahlungstemperatur.

In der amerikanischen Patentschrift 4,722,612 wird der "Sensoroffset" durch einen zweiten elektrisch entgegengesetzt geschalteten Strahlungssensor kompensiert, der so angeordnet ist, daß die Temperaturgradienten auf ihn wirken, ohne daß Strahlung auf ihn trifft. Doppelsensoren dieser Art sind jedoch naturgemäß teurer und größer als ein Einzelsensor.

In dem Dokument JP 63-91526, nach dem der Oberbegriff des vorliegenden Anspruchs 1 gebildet ist, wird zur Reduzierung der Temperaturgradienten eine Wärmeeinkopplung von der Wellenleitereinrichtung auf die zylindrische Seitenwand des Sensorgehäuses vorgeschlagen. Die optimale Wahl der Einkoppelstelle, die in etwa in der Mitte des Sensorgehäuses liegt, hängt hierbei jedoch nicht nur von der Größe und dem Vorzeichen eventuell auftretender Temperaturgradienten, sondern insbesondere auch von der speziellen Gestaltung des Sensorgehäuses ab, wobei nicht nur die unterschiedlichen Wärmekapazitäten der einzelnen Gehäuseteile, sondern auch die bei diesen Sensoren üblicherweise vorhandenen seitlichen Schweißnähte eine Rolle spielen, deren Wärmeleitfähigkeit von Sensor zu Sensor stark unterschiedlich sein kann. Zum Erzielen guter Ergebnisse müßte die Einkoppelstelle daher in der Praxis individuell einjustiert werden, was bei einer Serienfertigung sicherlich recht aufwendig wäre. Zudem wird bei dieser Art der Wärmeeinkopplung die Wärmeeinkopplung über die Anschlußdrähte des Sensors in den Boden des Sensorgehäuses nicht berücksichtigt, die sehr große Meßfehler nach sich ziehen kann. In dem genannten Dokument werden auftretende Temperaturgradienten auch über ein Kompensationselement am Boden des Sensorgehäuses berücksichtigt.

Die Aufgabe der vorliegenden Erfindung besteht in der Schaffung einer möglichst einfach und kostengünstig herzustellenden, leichten, handlichen und kompakten Meßspitze für ein Strahlungsthermorneter, die einen Strahlungssensor und einen Wellenleiter aufweist, die auch bei eventuell auftretenden Temperaturgradienten in der Meßspitze eine genaue und schnelle Temperaturbestimmung ermöglicht und die oben genannten Nachteile des Standes der Technik nicht aufweist.

Diese Aufgabe wird bei einer erfindungsgemäßen Meßspitze durch eine Wärmekoppeleinrichtung gelöst, die eine Wärmesammeleinrichtung und eine Wärmeverteilungseinrichtung umfaßt, die lediglich über eine Wärmekoppelverbindung in direktem thermischen Kontakt miteinander stehen, ansonsten aber thermisch voneinander isoliert sind, wobei die der einfallenden Strahlung zugewandte Seite und eine dieser Seite gegenüberliegende Seite des Sensorgehäuses so mit der Wärmeverteilungseinrichtung in direktem thermischen Kontakt stehen, daß bei einer Änderung der Temperatur des Sensorgehäuses sich die Temperaturen dieser Seiten des Sensorgehäuses gleichmäßig ändern, und wobei die Wärmesammeleinrichtung mit einer Wellenleitereinrichtung in direktem thermischen Kontakt steht, die eine Eintrittsöffnung für die zu messende Strahlung aufweist. Eine derartige Meßspitze hat den Vorteil, daß bei auftretenden Temperaturgradienten zwischen dem Wellenleiter und dem Strahlungssensor keine die Messung verfälschenden Temperaturgradienten innerhalb des Strahlungssensors auftreten. Wenn zudem die Wärmekapazität der Wärmekoppeleinrichtung klein gehalten ist, werden sich eventuell auftretende Temperaturunterschiede zwischen dem Wellenleiter und dem Strahlungssensor schnell ausgleichen. Andererseits hat eine große Wärmekapazität den Vorteil, daß die i.a. geringe beispielsweise bei einer Messung durch Kontakt mit dem Meßobjekt zu- oder abgeführte Wärmemenge nicht zu einem nennenswerten Temperaturgradient innerhalb der Meßspitze führt.

Bei einem bevorzugten Ausführungsbeispiel für eine erfindungsgemäße Meßspitze ist vorzugsweise die Wärmesammeleinrichtung gegenüber einem Meßspitzengehäuse thermisch isoliert.

Zur Optimierung des Wärmeübergangs besteht die Wämiekoppeleinrichtung vorzugsweise aus einem gut wärmeleitenden Material, wie z.B. Kupfer, Aluminium oder Zink, wobei sie zur Verringerung der auftretenden Temperaturgradienten eine relativ große thermische Masse aufweisen kann.

Weitere bevorzugte Ausführungsformen der erfindungsgemäßen Meßspitze sind in den Unteransprüchen beansprucht, wogegen Anspruch 8 ein Strahlungsthermometer mit einer erfindungsgemäßen Meßspitze betrifft.

Weitere Merkmale und Vorteile der vorliegenden Erfindung ergeben sich aus der nachfolgenden Beschreibung bevorzugter Ausführurigsbeispiele in Verbindung mit den zugehörigen Zeichnungen. In den Zeichnungen, in denen gleiche Bauteile mit gleichen Bezugszeichen versehen sind, zeigen:
- Fig. 1: eine schematische Darstellung einer erfindungsgemäßen Meßspitze zur Veranschaulichung der erfindungsgemäßen Wärmeeinkopplung in das Gehäuse des zugehörigen Strahlungssensors; und
- Fig. 2: ein Ausführungsbeispiel einer erfindungsgemäßen Meßspitze für ein Strahlungsthermometer.

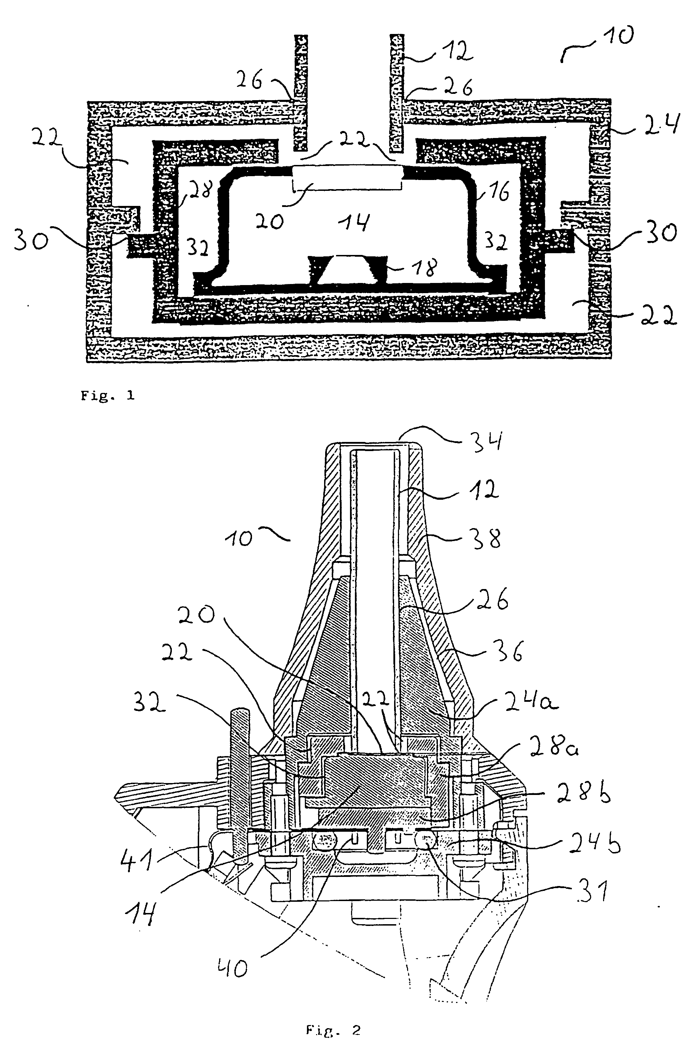

Fig. 1 zeigt in schematischer Darstellung eine erfindungsgemäße Meßspitze 10 für ein Strahlungsthermometer. Die Meßspitze 10 umfaßt eine Wellenleitereinrichtung 12 zur Weiterleitung der zu messenden Infrarotstrahlung von einer (nicht dargestellten) Eintrittsöffnung zu einem Strahlungssensor oder einem thermoelektrischen Wandler 14, der die durch die Strahlung im Sensor hervorgerufene partielle Temperaturerhöhung in ein elektrisches Ausgangssignal umwandelt, aus dem mittels einer (nicht dargestellten) nachgeschalteten Meßelektronik die gesuchte Temperatur bestimmt wird.

Der Strahlungs- oder Temperatursensor 14 umfaßt ein Sensorgehäuse 16, in dem als Sensorelemente 18 beispielsweise Thermoelemente angeordnet sind, die über (nicht dargestellte) Anschlußdrähte im Boden des Sensorgehäuses 16 mit der nachgeschalteten Meßelektronik verbunden sind. Die der einfallenden Strahlung bzw. der Wellenleitereinrichtung 12 zugewandte Seite des Sensorgehäuses 16 ist als Eintrittsöffnung für die zu messende Infrarotstrahlung mit einem Sensorfenster 20 versehen. Die Wellenleitereinrichtung 12 und der Strahlungssensor 14 sind durch einen Luftspalt 22 thermisch voneinander isoliert.

Der Strahlungssensor 14 ist von einer Wärmekoppeleinrichtung 24, 28, 30 umgeben. Die Wärmekoppeleinrichtung umfaßt eine Wärmesammeleinrichtung 24, die an der mit dem Bezugszeichen 26 versehenen Stelle in direktem thermischen Kontakt mit der Wellenleitereinrichtung 12 steht. Die Wärmesammeleinrichtung 24 ist üblicherweise nach außen hin durch einen Luftspalt von einem (nicht dargestellten) Meßspitzengehäuse thermisch isoliert, um den Wärmeeintrag so gering wie möglich zu halten. Zwischen dem Strahlungssensor 14 und der Wärmesammeleinrichtung 24 ist eine den Strahlungssensor 14 umgebende Wärmeverteilungseinrichtung 28 angeordnet, die durch den Luftspalt 22 thermisch von der Wellenleitereinrichtung 12 isoliert ist. Die Wärmesammeleinrichtung 24 und die Wärmeverteilungseinrichtung 28 sind ebenfalls über den Luftspalt 22 thermisch voneinander isoliert. Sie stehen lediglich über eine seitlich angeordnete Wärmekoppelverbindung 30 in direktem thermischen Kontakt miteinander. Die Wärmeverteilungseinrichtung 28 ist nach innen hin zu den Seiten des Sensorgehäuses 16 durch einen Luftspalt 32 thermisch isoliert, während sie mit der der einfallenden Strahlung bzw. der Wellenleitereinrichtung 12 zugewandten Seite des Sensorgehäuses 16, d.h. der Oberseite oder dem Deckel des Gehäuses 16, und der dieser Seite gegenüberliegenden Seite, d.h. der Unterseite oder dem Boden des Gehäuses 16, in direktem thermischen Kontakt steht. Zur Erreichung einer möglichst gleichmäßigen Erwärmung oder Abkühlung des Sensorgehäuses 16 liegt die Wärmeverteilungseinrichtung 28 hierbei mit Ausnahme des Sensorfensters 20 im wesentlichen ganzflächig an den genannten Seiten des Sensorgehäuses 16 an.

Die Wärmesammeleinrichtung 24 und die Wärmeverteilungseinrichtung 28 bestehen vorzugsweise aus einem gut wärmeleitenden Material, wie z.B. Kupfer, Aluminium, Zink oder dergleichen, um einen möglichst guten Wärmeübergang und eine rasche Einstellung des Temperaturgleichgewichts zu gewährleisten.

Bei einer Erwärmung bzw. Abkühlung der Wellenleitereinrichtung 12 oder der Wärmesammeleinrichtung 24 von außen treten in den genannten Bauteilen Temperaturgradienten auf. Die Wärmeenergie wird von der Wärmesammeleinrichtung 24 über die Wärmekoppelverbindung 30 teilweise zunächst an die Wärmeverteilungseinrichtung 28 und von dieser an den Boden und den Deckel des Sensorgehäuses 16 weitergegeben. Die Lage der Wärmekoppelverbindung 30 und die Form der Wärmeverteilungseinrichtung 28 werden hierbei stets so gewählt, daß die Wärme im wesentlichen gleichmäßig auf den Boden und auf den Deckel des Sensorgehäuses 16 übergeht, so daß im Strahlungssensor 14 möglichst keine Temperaturgradienten entstehen, die zu einer unterschiedlich starken Erwärmung der Kalt- und Warmstellen des Sensors 14 und zu einem entsprechenden Sensorausgangssignal führen würden. Dies ist durch den Aufbau des Sensors 14 bedingt, bei dem die Kaltstellen, die eine hohe Wärmekapazität besitzen, üblicherweise direkt an den Boden des Sensorgehäuses 16 gekoppelt sind, während die Warmstellen auf einer thermisch isolierten Membran mit sehr geringer Wärmekapazität liegen und nur über die Membran, das im Sensorgehäuse 16 befindliche Gas und über Wärmestrahlung an das Sensorgehäuse 16 gekoppelt ist.

Bei der erfindungsgemäßen Wärmeeinkopplung auf das Sensorgehäuse 16 werden über die Gestaltung der Wärmeverteilungseinrichtung 28 und die Anordnung der Wärmekoppelverbindung 30 nicht nur die üblicherweise relativ großen Unterschiede zwischen den Wärmekapazitäten von Boden und Deckel, sondern auch die Wärmeeinkopplung über die Anschlußdrähte des Strahlungssensors 14 in den Boden des Sensorgehäuses 16 kompensiert, so daß auch bei einer inhomogenen Erwärmung eine genaue Temperaturmessung gewährleistet ist.

Da der Strahlungssensor 14 über die Wärmekoppeleinrichtung 24, 28, 30 in thermischem Kontakt mit der Wellenleitereinrichtung 12 (und ggf. auch mit dem (nicht dargestellten) Strahleneintrittsfenster) steht, ist keine Kompensation der Eigenemission der Wellenleitereinrichtung 12 (und des Strahleneintrittsfensters) erforderlich. Zudem ist auch keine Kompensation von Nullpunktdrifts durch Temperaturänderungen mit Hilfe eines Shutters, zusätzlichen Sensoren, doppelten Strahlungssensoren oder dergleichen nötig. Bei der erfindungsgemäßen Wärmeeinkopplung können zudem auch preiswerte Thermopile- oder Bolometer-Sensoren eingesetzt werden, so daß keine speziell optimierten und teuren Sondertypen verwendet werden müssen.

Fig.2 zeigt ein spezielles Ausführungsbeispiel einer erfindungsgemäßen Meßspitze für ein Strahlungsthermometer. Die Meßspitze 10 umfaßt an ihrem vorderen Ende eine Eintrittsöffnung oder Fenster 34 für die zu messende Infrarotstrahlung, die von einem Wellenleiter 12 zu einem Strahlungssensor 14 geleitet wird, der von dem Wellenleiter 12 durch einen Luftspalt 22 thermisch isoliert ist.

Der Wellenleiter 12 steht entlang eines mit dem Bezugszeichen 26 versehenen Abschnitts mit einer Wärmesammeleinrichtung 24 thermisch in Kontakt, die zur Vereinfachung der Montage aus einem Oberteil 24a und einem einfach mit dem Oberteil 24a zusammenfügbaren Unterteil 24b besteht, die zur Reduktion von Temperaturgradienten so ausgebildet sind, daß sie eine relativ große thermische Masse aufweisen. Um den Wärmeeintrag möglichst gering zu halten, ist die Wärmesammeleinrichtung 24 nach außen hin durch einen Luftspalt 36 von einem üblicherweise aus Kunststoff bestehenden Meßspitzengehäuse 38 thermisch isoliert.

Die Wärmesammeleinrichtung 24 umgibt eine ebenfalls zweiteilig ausgebildete einfach zusammenfügbare Wärmeverteilungseinrichtung 28a bzw. 28b, gegenüber der sie, bis auf eventuelle Berührungsstellen durch einen Luftspalt 22 thermisch isoliert ist. Zwischen dem Unterteil 24b der Wärmesammeleinrichtung und dem Unterteil 28b der Wärmeverteilungseinrichtung befindet sich ein elastischer O-Ring 31, der schlecht wärmeleitend ist und eventuelle Toleranzen ausgleicht. Das Oberteil 28a der Wärmeverteilungseinrichtung ist durch einen Luftspalt 32 gegenüber den Seitenflächen des Sensorgehäuses 16 und den Luftspalt 22 gegenüber der Wellenleitereinrichtung 12 thermisch isoliert, während es mit der Oberseite oder dem Deckel des Sensorgehäuses 16 in direktem thermischen Kontakt steht. Das Unterteil 28b der Wärmeverteilungseinrichtung steht wiederum mit der Unterseite oder dem Boden des Sensorgehäuses 16 praktisch ganzflächig in thermischem Kontakt, um einen möglichst optimalen Wärmeübergang zu gewährleisten.

Zur Optimierung des Wärmeübergangs bestehen die Wärmesammeleinrichtung 24 und die Wärmeverteilungseinrichtung 28 zudem auch aus einem gut wärmeleitenden Material, wie z.B. Kupfer, Aluminium, Zink oder dergleichen.

Die Anschlußdrähte 40 des Sensors 14 liegen innerhalb der Wärmesammeleinrichtung 24, wobei sie von dieser thermisch isoliert sind. Der Sensor 14 ist über eine flexible Leiterplatte 41 mit einer (nicht dargestellten) nachgeschalteten Elektronikeinrichtung des Strahlungsthermometers zur Auswertung der von dem Strahlungssensor 14 erzeugten elektrischen Ausgangssignale elektrisch verbunden. Um den Wärmeeintrag über die Anschlußdrähte 40 zu minimieren, ist diese Leiterplatte sehr dünn ausgebildet. Aus dem genannten Grund weist sie auch eine schlechte Wärmeleitfähigkeit auf und ist in der Nähe des O-Rings 31 thermisch an die Wärmesammeleinrichtung 24 angekoppelt.

Wie sich aus den obigen Ausführungen ergibt, ermöglicht die erfindungsgemäße Wärmeankopplung des Sensorgehäuses 16 an die Wellenleitereinrichtung 12 bzw. an die Umgebung die Schaffung einer kleinen, leichten und kompakten Meßspitze für handliche und bedienungsfreundliche Strahlungsthermometer, bei denen durch Temperaturgradienten bedingte Fehlmessungen sicher vermieden werden. Aufgrund ihres einfachen Aufbaus und der Verwendung preisgünstiger herkömmlicher Strahlungssensoren, wie z.B. Thermopile oder Bolometer, ist die erfindungsgemäße Meßspitze zudem auch einfach und kostengünstig herzustellen.

## Patentansprüche

1. Meßspitze (10) für ein Strahlungsthermometer mit einer Eintrittsöffnung (34) für die zu messende Strahlung, die durch eine von der Eintrittsöffnung (34) ausgehende Wellenleitereinrichtung (12) zu einem Strahlungssensor (14) geleitet wird, der die auftreffende Strahlung in ein elektrisches Ausgangssignal umwandelt und ein Sensorgehäuse (16) umfaßt, das eine der einfallenden Strahlung zugewandte Seite und eine dieser Seite gegenüberliegende Seite aufweist, und das mit der Wellenleitereinrichtung (12) über eine Wärmekoppeleinrichtung (24, 28, 30) thermisch gekoppelt ist,
wobei die Wärmekoppeleinrichtung (24, 28, 30) eine Wärmesammeleinrichtung (24) und eine Wärmeverteilungseinrichtung (28) umfaßt, die lediglich über eine Wärmekoppelverbindung (30) in direktem thermischen Kontakt miteinander stehen, ansonsten aber thermisch voneinander isoliert sind, wobei die zwei gegenüberliegenden Seiten des Sensorgehäuses (16) so mit der Wärmeverteilungseinrichtung (28) in direktem thermischen Kontakt stehen, daß bei einer Änderung der Temperatur des Sensorgehäuses (16) sich die Temperaturen dieser Seiten des Sensorgehäuses (16) gleichmäßig ändern, und wobei die Wärmesammeleinrichtung (24) mit der Wellenleitereinrichtung (12) in direktem thermischen Kontakt steht.

2. Meßspitze nach Anspruch 1,
**dadurch gekennzeichnet,**
**daß** die Wärmekoppeleinrichtung (24, 28, 30) aus einem gut wärmeleitenden Material besteht, beispielsweise Kupfer, Aluminium oder Zink.

3. Meßspitze nach einem der Ansprüche 1 bis 2,
**dadurch gekennzeichnet,**
**daß** die Wärmesammeleinrichtung (24) und/oder die Wärmeverteilungseinrichtung (28) ein Oberteil und ein Unterteil (24a, 24b; 28a, 28b) umfassen.

4. Meßspitze nach einem der Ansprüche 1 bis 3,
**dadurch gekennzeichnet,**
**daß** die Wärmesammeleinrichtung (24) nach außen hin zu einem Gehäuse (38) thermisch isoliert ist.

5. Meßspitze nach einem der Ansprüche 1 bis 4,
**dadurch gekennzeichnet,**
**daß** die Wärmeverteilungseinrichtung (28) und die Wellenleitereinrichtung (12) thermisch voneinander isoliert sind.

6. Meßspitze nach einem der vorhergehenden Ansprüche,
**dadurch gekennzeichnet,**
**daß** die Anschlußdrähte (40) des Strahlungssensors (14) innerhalb der Wärmesammeleinrichtung (24) angeordnet und von dieser thermisch isoliert sind.

7. Meßspitze nach Anspruch 6,
**dadurch gekennzeichnet,**
**daß** die Anschlußdrähte (40) mit einer Leiterplatte (41) elektrisch verbunden sind, die dünn ausgebildet ist und eine schlechte Wärmeleitfähigkeit aufweist, und die thermisch mit der Wärmesammeleinrichtung (24) gekoppelt ist.

8. Strahlungsthermometer mit einer Meßspitze nach einem der Ansprüche 1 bis 7.

## Claims

1. A probe (10) for a radiation thermometer having an entrance opening (34) for passage of the radiation to be measured which is directed, through a waveguide device (12) extending from the entrance opening (34), to a radiation sensor (14) that converts the incident radiation into an electrical output signal and comprises a sensor housing (16) which has a side close to the incident radiation and a side opposite to said side and which is thermally coupled to the waveguide device (12) via a thermal coupling arrangement (24, 28, 30),
wherein the thermal coupling arrangement (24, 28, 30) comprises a heat concentrating device (24) and a heat distributing device (28) which are in direct thermal contact with each other only via a thermal junction (30) while being otherwise thermally insulated from each other, wherein the two opposed sides of the sensor housing (16) are in direct thermal contact with the heat distributing device (28), such that a change in temperature of the sensor housing (16) produces a uniform change in the temperatures of said sides of the sensor housing (16), and wherein the heat concentrating device (24) is in direct thermal contact with the waveguide device (12).

2. The probe as claimed in claim 1,
**characterized in that** the thermal coupling arrangement (24, 28, 30) is made of a material having good heat conductive properties as, for example, copper, aluminum or zinc.

3. The probe as claimed in any one of the claims 1 to 2,
**characterized in that** the heat concentrating device (24) and/or the heat distributing device (28) comprise an upper part and a lower part (24a, 24b; 28a, 28b).

4. The probe as claimed in any one of the claims 1 to 3,
**characterized in that** towards the outside the heat concentrating device (24) is thermally insulated from a housing (38).

5. The probe as claimed in any one of the claims 1 to 4,
**characterized in that** the heat distributing device (28) and the waveguide device (12) are thermally insulated from each other.

6. The probe as claimed in any one of the preceding claims,
**characterized in that** the leads (40) of the radiation sensor (14) are disposed within the heat concentrating device (24) and thermally insulated therefrom.

7. The probe as claimed in claim 6,
**characterized in that** the leads (40) are electrically connected to a printed circuit board (41) which is of a thin configuration and of poor thermal conductivity and is thermally coupled to the heat concentrating device (24).

8. A radiation thermometer with a probe as claimed in any one of the claims 1 to 7.

## Revendications

1. Pointe de mesure (10) pour un thermomètre de mesure du rayonnement comportant une ouverture d'entrée (34) du rayonnement à mesurer, qui est guidé vers un capteur de rayonnement (14) par un dispositif de guide d'ondes (12) partant de l'ouverture d'entrée (34), lequel capteur convertit le rayonnement entrant en un signal de sortie électrique et comprend un logement de capteur (16), qui présente un côté tourné vers le rayonnement entrant et un côté se trouvant en vis-à-vis du premier côté et qui est couplé thermiquement au dispositif de guide d'ondes (12) par un dispositif de couplage thermique (24, 28, 30),
dans laquelle le dispositif de couplage thermique (24, 28, 30) comprend un dispositif de collecte de chaleur (24) et un dispositif de répartition de chaleur (28), qui sont en contact thermique direct l'un avec l'autre uniquement par l'intermédiaire d'une liaison de couplage thermique (30), mais sont sinon thermiquement isolés l'un de l'autre, dans laquelle les deux côtés en vis-à-vis du logement de capteur (16) sont en contact thermique direct avec le dispositif de répartition de chaleur (28), de telle sorte que, lors d'une variation de la température du logement de capteur (16), les températures desdits côtés du logement de capteur (16) varient régulièrement et dans laquelle le dispositif de collecte de chaleur (24) est en contact thermique direct avec le dispositif de guide d'ondes (12).

2. Pointe de mesure selon la revendication 1,
**caractérisée en ce que**
le dispositif de couplage thermique (24, 28, 30) est constitué d'un matériau à bonne conductivité thermique, par exemple du cuivre, de l'aluminium ou du zinc.

3. Pointe de mesure selon une des revendications 1 à 2, **caractérisée en ce que**
le dispositif de collecte de chaleur (24) et/ou le dispositif de répartition de chaleur (28) comprennent une partie supérieure et une partie inférieure (24a,24b ; 28a,28b).

4. Pointe de mesure selon une des revendications 1 à 3, **caractérisée en ce que**
le dispositif de collecte de chaleur (24) est isolé thermiquement sur sa partie extérieure allant vers un logement (38).

5. Pointe de mesure selon une des revendications 1 à 4, **caractérisée en ce que**
le dispositif de répartition de chaleur (28) et le dispositif de guide d'ondes (12) sont isolés thermiquement l'un de l'autre.

6. Pointe de mesure selon une des revendications précédentes, **caractérisée en ce que**
les fils de sortie(40) du capteur de rayonnement (14) sont disposés à l'intérieur du dispositif de collecte de chaleur (24) et sont isolés thermiquement de celui-ci.

7. Pointe de mesure selon la revendication 6,
**caractérisée en ce que**
les fils de sortie (40) sont reliés électriquement à une carte de circuit imprimé (41), qui présente une configuration mince et une faible conductivité thermique et qui est couplée thermiquement à un dispositif de collecte de chaleur (24).

8. Thermomètre de mesure du rayonnement avec une pointe de mesure selon une des revendications 1 à 7.
